# EUROPEAN PATENT SPECIFICATION

(11) **EP 0 512 379 B1**
(45) Date of publication and mention of the grant of the patent: **19.07.1995**
(21) Application number: 92107250.0
(22) Date of filing: 29.04.1992
(51) Int. Cl.: A01N 43/30

(54) **Insecticides containing ternary mixtures of methylenedioxybenzene derivatives and procedure for their preparation**
Insektizide bestehenden aus drei Mischungen von Methylendioxylenbenzene und Verfahren zu ihrer Aufbereitung
Insecticides contenant les mélanges ternaires de dérivés de la méthylènedioxybenzène, et procédé pour leur préparation

(30) Priority: 10.05.1991 IT MI911284
(43) Date of publication of application: 11.11.1992
(73) Proprietor: ENDURA S.p.A., I-40121 Bologna (IT)
(72) Inventor: Tozzi, Antonio, 40121 Bologna (IT)
(74) Representative: Gervasi, Gemma, Dr.

(56) References cited:
- EP-A- 0 282 706
- GB-A- 1 159 089
- US-A- 2 550 737
- CHEMICAL ABSTRACTS vol.99, no.21, 21 October 1983, Columbus OhioUS; abstract no. 171344P, SUMITOMO CHEMICAL CO., LTD. et al: Insecticidal Composition page 250

## Description

### A. Technical field

This invention relates to insecticides containing ternary mixtures of methylenedioxybenzene derivatives having a synergistic effect on the active insecticidal ingredient contained therein as well as the procedure for the preparation of same.

### B. Prior art

Methylenedioxybenzene derivatives having general formula 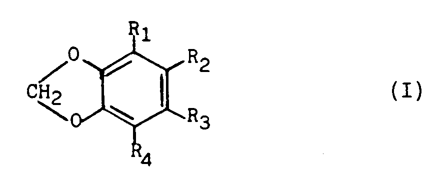
where R₁, R₂, R₃, and R₄ mean hydrogen or an alkyl group or a halogen atom or a group having formula 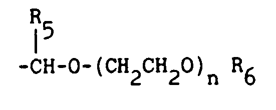
where R₅ means hydrogen or an alkyl group and R₆ means an alkyl group, are currently used as synergists in some insecticides.

US patents Nos. 2,485,681 and 2,550,737 describe natural pyrethrins mixtures with methylenedioxybenzene derivatives having formula 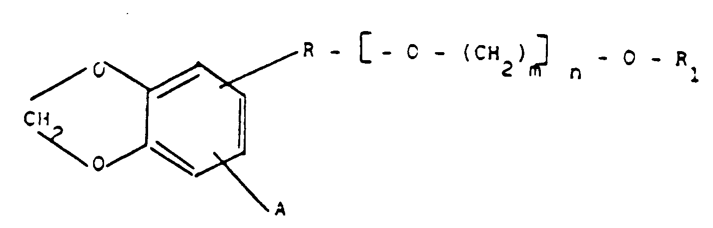
where A means hydrogen or an aliphatic radical, R means a bivalent aliphatic radical, R₁ means a hydrocarbon radical, m means a number equal to or higher than 2, n means a number equal to or higher than 1. One of the compounds with the general formulas disclosed in the aforesaid patents is piperonyl butoxide.

US patent No. 3,070,607 discloses synergists for natural and synthetic pyrethrins having general formula 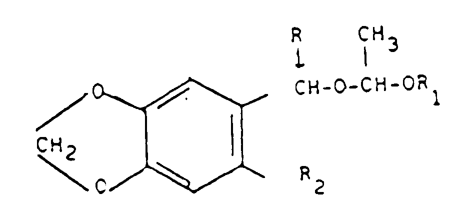
where R means hydrogen or methyl or ethyl; R₁ means alkoxyalkyl or polyalkoxyalkyl; R₂ means hydrogen or propyl or propenyl or allyl.

US patent No. 3,117,135 discloses synergists for natural and synthetic pyrethrins having general formula 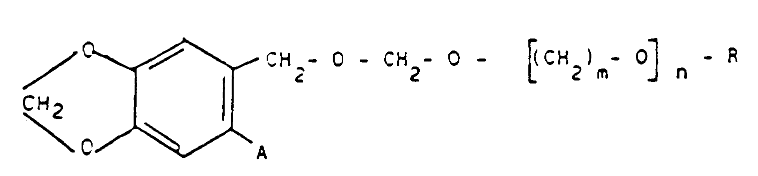
where R means alkyl group containing 1 to 4 carbon atoms, m means 2 or 3, and n means 1 or 2, A means propyl or allyl.

British patent No. 1,159,089 discloses synergists for natural and synthetic pyrethrins having general formula 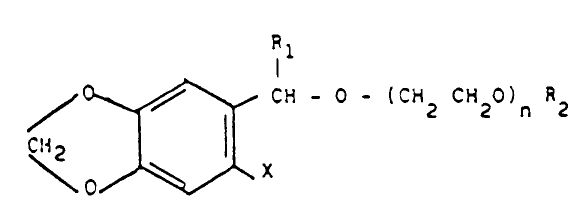
where R₁ means hydrogen or an alkyl group, R₂ means an alkyl group, and X means a halogen or the aforementioned group 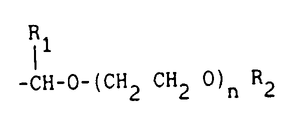
Japanese patent application No. 58-110,504 (as per C.A. 99, 171334) by Sumitomo discloses compounds designed to control pyrethroid-resistant insects, having general formula 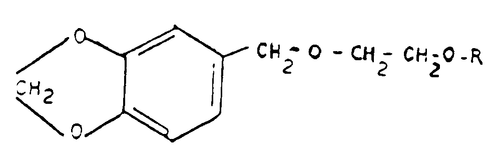
where R means CH₃ or CH₂-CH₂-OC₄H₉.

Japanese patent application No. 61-24586 by Sumitomo discloses synergists for insecticides based on pyrethroids, fenvalerates, and carbamates having general formula 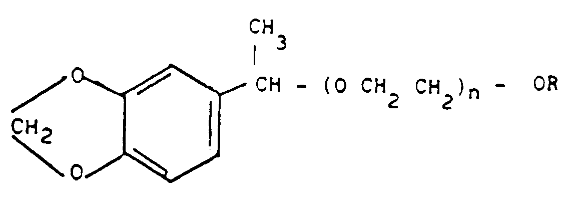
where R means hydrogen or a lower alkyl group, and n is 1 or 2 or 3.

B.P. Moore and P.S. Hewlett, in J. Sci. Food Agric., 9th Oct., 1958, p. 666, disclose the relationship between chemical structure and synergistic effect in mixtures of natural pyrethrins and methylenedioxybenzene derivatives of different types having formula 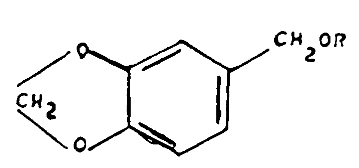
where R means (CH₂)₂-O-(CH₂)₆-CH₃ or (CH₂CH₂O)₃-CH₃, and state that synergism is specific to the methylenedioxybenzene group.

J.E. Casida et al., in Science 153, 1131 (1966), when describing the metabolism of various methylenedioxybenzene derivatives in respect of their synergistic effect, states that said compounds synergize the insecticidal activity of almost all classes of chemical insecticides. Piperonyl buthoxide is expressly mentioned.

Out of all aforesaid compounds, the most widely used as a synergist for insecticides certainly is piperonyl butoxide (PBO), particularly in combination with natural pyrethrins extracted from pyrethrum flowers. The systematic use of piperonyl butoxide in the last thirty years has allowed a reduction in the quantities of insecticide and, therefore, in the cost of the formulations used.

PBO is prepared using safrole as a raw material; it is extracted from the sassafras wood, a tree that grows spontaneously in some limited areas of the subtropical region. The essential oil availability is ever decreasing because sassafras trees are limited in number and because green ecological problems are arising.

On the other hand, the production of safrole by chemical synthesis has not been materialized so far due to intrinsic difficulties of the reaction and to yield problems.

The use of single derivatives of methylenedioxybenzene, as envisaged in many of the aforesaid patents, is scarcely attractive from an industrial point of view, the isolation and purification of a single product from the reaction mixtures being hardly feasible.

Investigations in the field were carried out by the Applicant. As already disclosed in Applicant's Italian patent No. 1,203,333, the derivatives of the aforesaid type can be used also in the form of mixtures, i.e. without being isolated and purified from the reaction mixtures containing them upon completion of the process for their synthesis, with no decrease in their synergistic effect, which is equal to or is even higher than that of piperonyl butoxide.

### C. Technical problem

The uncertainty of the supply of vegetable raw materials for use in the preparation of piperonyl butoxide presses for the search and development of new synthetic synergists suitable for replacing them and capable of stabilizing and possibly decreasing the cost of the final insecticidal compositions.

### D. Detailed description of the invention

The Applicant found that mixtures of mono-, di-, and tri-substituted derivatives of methylenedioxybenzene showing a clearcut synergistic action - surprisingly higher than that of the single components of the mixture and of piperonyl butoxide itself - can be obtained in high yields and with high purity by a suitable synthesis procedure.

Mixtures of three derivatives of methylenedioxybenzene having formula 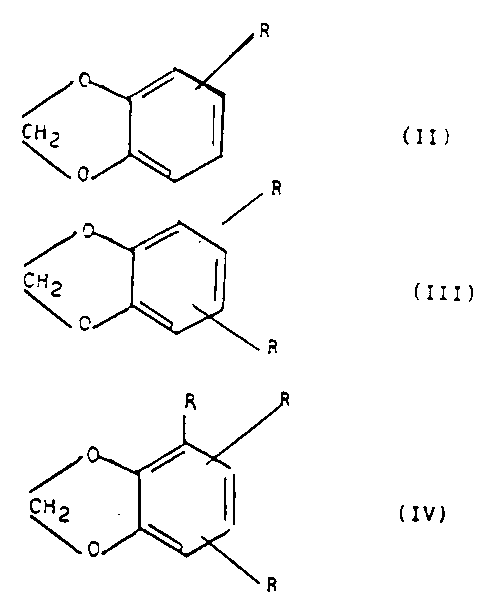
where R means CH₂O-(CH₂-CH₂-O)₂-R₁ and R₁ means hydrogen or an alkyl group containing 1 to 4 carbon atoms, have a synergistic effect equal to or even higher than that of the same amount (by wt.) of the well known piperonyl butoxide, when used in combination with insecticides selected from the group consisting of natural pyrethrins, synthetic pyrethoids, carbamates, organic phosphorus compounds, avermectine, and insect growth regulators.

This result is surprising because the prior art teaches that the methylenedioxy radical is responsible for the synergistic effect of the methylenedioxybenzene derivatives. The methylenedioxybenzene content in piperonyl butoxide is 36% by wt. and this percentage is much lower in the ternary mixture as obtained per this invention. If R₁ in formulas (II), (III) and (IV) is C₄H₉, the methylenedioxybenzene content in a mixture having the three derivatives in a 0.3:0.6:0.1 weight ratio is about 28% by wt. only.

Therefore, the expected synergistic effect should be much lower than that of the corresponding weight amount of piperonyl butoxide. The effect found, as may be inferred from the examples reported hereinafter, is instead equivalent or even higher.

The results obtained are, in our opinion, brought about by the presence of lipophilic linear groups and by the different molecular weights of the homologues (II), (III) and (IV) constituting the mixture, which differently contribute to the synergistic effect of the mixture itself. The insecticidal compositions obtained, with addition of the same weight amount of synergist, are as active as the compositions containing piperonyl butoxide, against flies and mosquitos and are even more active against more resistant insects such as black-beetles and grasshoppers.

The insecticidal compositions consist of:
a) a ternary mixture of methylenedioxybenzene derivatives having formulas (II), (III), (IV), and
b) an insecticide selected from the group consisting of natural pyrethrins, synthetic pyrethroids, carbamates, organic phosphorus compounds, avermectine, and insect growth regulators.

In said ternary mixture of methylenedioxybenzene derivatives, the compounds having formula (II) are present in weight amounts of 10 to 50%; the compounds having formula (III) in weight amounts of 30 to 70%, and the compounds having formula (IV) in weight amounts of 2 to 15%.

In said insecticidal compositions, the weight ratio of component a) to component b) ranges between 100:1 and 1:1.

According to a significant aspect of the present invention, the mixtures of compounds having formulas (II), (III) and (IV), in which the compounds having formula (II) are present in a weight amount ranging from 10 to 50%, the compounds having formula (III) in a weight amount ranging from 30 to 70%, and the compounds having formula (IV) in a weight amount from 2 to 15%, are prepared according to a procedure comprising the steps of:
a) chloromethylating methyldioxybenzene with hydrochloric acid in an aqueous solution (37%) and paraformaldehyde for 1 to 10 hrs. at a temperature between 40°C and 80°C;
b) isolating by decantation the organic fraction of the reaction mass obtained in step a), washing the mass consisting of a mixture of mono-, di-, and tri-chloromethylderivatives of methylenedioxybenzene with water and with a sodium bicarbonate aqueous solution; and
c) treating said mixture of chloromethylderivatives in an inert organic solvent with sodium salt or potassium salt of an alcohol having general formula R₁-(OCH₂-CH₂)₂-OH, where R₁ means hydrogen or an alkyl group containing 1 to 4 carbon atoms, at a temperature between 20°C and 100°C, the said alcohol being in slight stoichiometric excess over the chloromethyl groups content in the said mixture.

Step a) can be carried out either in the absence or in the presence of an inert organic solvent of the hydrocarbon or chlorinated type. Most preferred solvents are benzene, cyclohexane, and methylene chloride.

In the preferred embodiments of the procedure under this invention, step a) is carried out in the presence of the same solvent as will be used in step c).

The insecticidal substances that are particularly suitable for the obtainment of insecticidal compositions are reported below:
1. synthetic pyrethroids, such as allethrin, permethrin, tetramethrin, resmethrin, cyfenothrin, fenfluthrin, fenproparthrin, as well as the compounds that are generally regarded as pyrethroids even if they do not have the usual cyclopropane ring, i.e. fenvalerate, fluvalinate, and their resolved stereoisomers;
2. carbamate insecticides, such as carbaryl and propoxur;
3. organic phosphorus insecticides, such as dichlorvos and chlorpyrifos;
4. avermectine;
5. insect growth regulators, such as diflubenzuron, methoprene, hydroprene, and fenoxycarb.

The following examples will further illustrate this invention.

### EXAMPLE 1

A 1,500 ml glass flask equipped with stirrer, reflux condenser, and thermometer was fed with methylenedioxybenzene (45.8 g-0.375 moles), paraformaldehyde (29.2 g-0.973 moles), 450 ml of cyclohexane and 37% HCl (250 ml). The temperature was raised to 55°C and maintained at said value for 3 hrs.

The reaction was controlled by means of a gaschromatograph.

The reaction gave a monosubstituted chloromethylated compound, which was gradually transformed into a disubstituted compound and then partially into a trisubstituted compound.

When the monochloromethyl content reached the value of 30% by weight of the total, the reaction mixture was cooled and placed into a separator and the aqueous layer was separated and discarded.

The organic layer was slowly (about an hour) added to a flask equal to the previously used one containing 100.34 g (0.610 moles) of di-ethylene-glycol-mono-butyl-ether and 49.5 g (1.237 moles) of NaOH. The mixture was refluxed for 5 hours, then cooled and washed with water up to elimination of the formed salt and of alkali. The solvent was distilled off at reduced pressure of 2660 Pa (20 mm of Hg). 148 g of a mixture of products (II), (III) and (IV) were obtained, said products being respectively present in the mixture at the percentages by wt. of 31.27%, 58.51% and 4.3%.

### EXAMPLE 2

The example 1 was repeated in the absence of cyclo-hexane. The reaction mixture was maintained at 55°C for 2.30 hours, then was cooled at room temperature. 120 ml of benzene were added to the reaction mixture and the organic layer was separated and washed, and then treated with di-ethylene-glycol-mono-butyl-ether, as in example 1. After the elimination of the solvent by distillation at reduced pressure, 131 g of a mixture of products (II), (III) and (IV) were obtained, said products being respectively present in the mixture at the percentages by wt. of 29.8%, 55.1% and 10.6%.

### EXAMPLE 3

A glass flask as in example 1, was fed with methylenedioxybenzene (91,6 g), paraformaldehyde (58,4 g), 100 ml of methylene chloride and 37% HCl (500 ml), The temperature was raised to 55°C and maintained at said value for 7 hrs.

The reaction was controlled by means of a gaschromatograph.

When the monochloromethyl content reached the value of 30% by weight of the total, the reaction mixture was cooled and placed into a separator and the aqueous layer was separated and discarded. The organic layer was washed with water and anhydrified and then methylene chloride was distilled off at reduced pressure. The residue was treated in a 2,000 ml flask with a benzene solution of sodium butylate obtained by reaction of 224 g of di-ethylene-glycol-mono-butyl-ether and 74 g of NaOH in 220 ml of benzene. The mixture was refluxed at reduced pressure and at temperature of 60°C for 5 hours, then the formed water, benzene and non reacted alcohol were distilled off at reduced pressure (20 mm of Hg). 262 g of a mixture of products (II), (III) and (IV) were obtained, said products being respectively present in the mixture at the percentages by wt. of 31.0%, 58.8% and 6.2%.

### EXAMPLE 4

The procedure described under example 3 was repeated, but, in chloromethylation, methylene chloride was not added. The reaction was continued for 3 hours. The final mixture had the following composition: (II) 30.8% by wt, (III) 64.6% by wt, (IV) 2.2% by wt.

### EXAMPLE 5

With a view to determining the synergistic activity of the mixtures of (II), (III) and (IV) disclosed in this invention, comparative tests were carried out by using a mixture obtained as in example 1 in combination with commercial insecticide in comparison with the same insecticide combined with piperonyl butoxide (PBO - technical grade - 94% by wt.).

The tests were performed by using a standard aerosol formulation having the following composition:

| | |
|---|---|
| insecticide | 0.1 - 1.0 % by wt. |
| synergist | 0.45 - 1.0 % by wt. |
| isopropyl alcohol | 10.0 % by wt. |
| aerosol propellant | 50.0 % by wt. |
| n-dodecane | 38.0 - 39.4 % by wt. (balance to 100) |

The tests were performed on adults of Blatta orientalis and each test was repeated four times. The average results obtained are shown in Table 1.

**Table 1**

| TEST | INSECTICIDE | % | SYNERGIST | % | % MORTALITY AFTER 24 HRS |
|---|---|---|---|---|---|
| 1A | Bioallethrin | 0.2 | PBO | 0.5 | 55 |
| 1B | " | 0.2 | Ex.1 | 0.5 | 100 |
| 2A | Cypermethrin | 0.1 | PBO | 0.5 | 95 |
| 2B | " | 0.1 | Ex.1 | 0.5 | 100 |
| 3A | Bioresmethrin | 0.15 | PBO | 0.45 | 15 |
| 3B | " | 0.15 | Ex.1 | 0.45 | 47 |
| 4A | Permethrin | 0.15 | PBO | 0.45 | 10 |
| 4B | " | 0.15 | Ex.1 | 0.45 | 35 |
| 5A | Propoxur | 1.0 | PBO | 1.0 | 100 |
| 5B | " | 1.0 | Ex.1 | 1.0 | 100 |
| 6A | Propetamphos | 0.2 | PBO | 1.0 | 100 |
| 6B | " | 0.2 | Ex.1 | 1.0 | 100 |

Note that sublethal doses of insecticides were used in tests 3 and 4 for the purpose of emphasizing the different results obtained with synergistic mixtures as obtained by the process of this invention and, respectively, with PBO.

### EXAMPLE 6

By using a standard aerosol formulation as in example 5, a mixture of (II), (III) and (IV), as obtained in example 4, was tested in comparison with the single pure products (II) and (III) as synergistic agents in a mixture with 0.4% by wt. of technical Bendiocarb against adults of Musca domestica and each test was repeated four times. The average results obtained are shown in Table 2.

**Table 2**

| TEST | INSECTICIDE | % | SYNERGIST | % | % MORTALITY AFTER 24 HRS |
|---|---|---|---|---|---|
| 2A | Bendiocarb | 0.4 | Ex.4 | 0.8 | 34.7 |
| 2B | " | 0.4 | (II) | 0.8 | 27.7 |
| 2C | " | 0.4 | (III) | 0.8 | 26.5 |

Note that sublethal doses of insecticides were used in tests for the purpose of emphasizing the different results obtained with synergistic mixtures as resulting from this invention and, respectively, with pure compounds (II) and (III) of the same mixture.

### EXAMPLE 7

Larvas of Heliotis armigera, the well known pest of cotton, were treated with 0.2 »g fenvalerate/larva. The mortality was of 32%. In some comparative tests, said larvas were treated with 50»g piperonyl butoxide/larva, 15 min. before being treated with fenvalerate. Mortality reached 96%.

In further comparative tests, the said larvas were treated with 10 »g/larva of the mixture of compounds (II), (III) and (IV) as obtained in example 3.

Mortality was 94.5%, i.e. practically equivalent to that occurring with a quantity of piperonyl butoxide five times that of the ternary mixture obtained via this invention.

### EXAMPLE 8

A comparison between the synergistic effect of the mixture of compounds (II), (III) and (IV) as obtained in example 2, and of piperonyl butoxide (PBO - technical grade - 94% by wt.) on cypermethrin activity against nymphs of Schistocerca gregaria (locusts) was determined by field trials.

The trials were carried out with 0.5 l/ha insecticidal mixture using deodorized kerosene as carried and an ULV (Ultra Low Volume) system for the distribution.

The insecticidal mixtures efficacy was determined by counting the per cent number of knocked down locusts after 1, 3, 6, 20, and 24 hours from the treatment. The mixtures used consisted of cypermethrin (7.5% by wt.), cypermethrin (6% by wt.) with the same amount of PBO (12% by wt.) and the mixture of (II), (III) and (IV) (12% by wt.).

The expression "knocked down locusts" means the locusts that, on detection, were found dead or were lying inert or that made convulsive movements if stimulated mechanically. Like in all treatments with pyrethroids, some "dead" locusts can recover within the 24 hours of treatment.

The results obtained (average of 4 trials) are reported in Table 3.

**Table 3**

| **Percentage of knocked down nymphs of Schistocerca** **gregaria** | | | | | |
|---|---|---|---|---|---|
| Mixture used | % 1 hr | % 3 hrs | % 6 hrs | % 20 hrs | % 24 hrs |
| cypermethrin | 26.0 | 62.3 | 23.5 | 12.8 | 14.5 |
| cyperm.+PBO | 29.3 | 33.5 | 27.0 | 25.8 | 27.6 |
| cyperm.+Ex.2 | 60.5 | 88.3 | 89.5 | 74.5 | 65.5 |

## Claims

1. Procedure for the preparation of a ternary mixture of methylenedioxybenzene derivatives having formulas 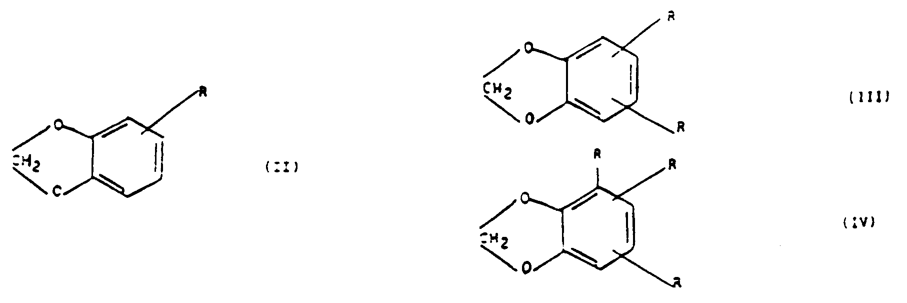 where R means CH₂O-(CH₂-CH₂-O)₂-R₁ and R₁ means hydrogen or an alkyl group containing 1 to 4 carbon atoms, in which the compounds having formula (II) are present in a weight amount ranging from 10 to 50%, the compounds having formula (III) in a weight amount ranging from 30 to 70%, and the compounds having formula (IV) in a weight amount from 2 to 15%, comprising the steps of:
a) chloromethylating methylenedioxybenzene with hydrochloric acid in an aqueous solution (37%) and paraformaldehyde for 1 to 10 hrs at a temperature between 40°C and 80°C;
b) isolating by decantation the organic fraction of the reaction mass obtained in step a), washing the mass consisting of a mixture of mono-, di-, and tri-chloromethyl derivatives of methylenedioxybenzene with water and with a sodium bicarbonate aqueous solution;
c) treating the obtained mixture in an inert organic solvent with sodium salt or potassium salt of an alcohol having general formula R₁-(OCH₂-CH₂)₂-OH where R₁ means hydrogen or an alkyl group containing 1 to 4 carbon atoms, at a temperature between 20°C and 100°C, said salt being in stoichiometric excess over the chloromethyl groups content in the said mixture; and
d) recovering the ternary mixture of (II), (III) and (IV), after washing with water, by distilling off said solvent and excess alcohol.

2. The procedure as per claim 4, wherein step a) is carried out in the presence of an inert organic solvent of hydrocarbon or chlorinated type.

3. The procedure as per claim 4, wherein the said inert organic solvent is selected in the group consisting of benzene, cyclohexane and methylene chloride.

4. The procedure as per claim 4, wherein step a) is carried out in the presence of the same solvent as will be used in step c).

5. The procedure as per claim 4, wherein in step c) said sodium or potassium salt of said alcohol is directly obtained by adding to the reaction mixture sodium or potassium hydroxide and said alcohol in excess over stoichiometric amount.

## Patentansprüche

1. Verfahren zur Herstellung einer ternären Mischung aus Methylendioxybenzolderivaten mit den Formeln 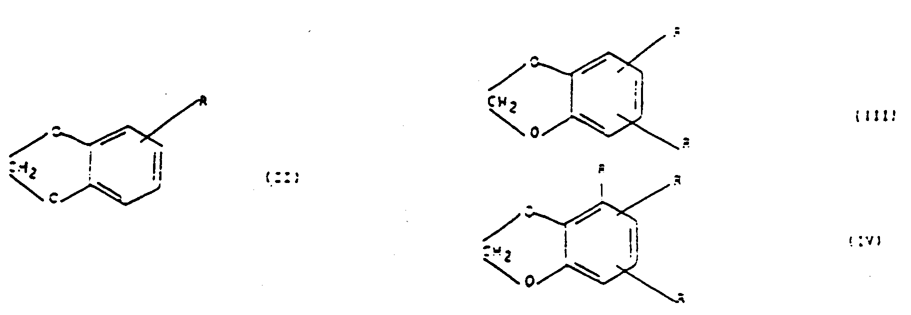 worin R CH₂O-(CH₂-CH₂-O)₂-R₁ bedeutet, und worin R₁ Wasserstoff oder eine Alkylgruppe mit 1 bis 4 Kohlenstoffatomen bedeutet, worin die Verbindung mit der Formel (II) in einer Gewichtsmenge im Bereich von 10 bis 50%, die Verbindung mit der Formel (III) in einer Gewichtsmenge im Bereich von 30 bis 70% und die Verbindung mit der Formel (IV) in einer Gewichtsmenge von 2 bis 15% vorhanden sind, umfassend die folgenden Schritte:
a) Chloromethylierung von Methylendioxybenzol mit Salzsärue in einer wässrigen Lösung (37%) und mit Paraformaldehyd für 1 bis 10 Stunden bei einer Temperatur zwischen 40 und 80°C;
b) Isolieren der organischen Fraktion der Reaktionsmasse, erhalten in Schritt a) durch Dekantieren, Waschen der Masse, bestehend aus einer Mischung von Mono-, Di- und Trichloromethylderivaten von Methylendioxybenzol, mit Wasser und mit einer wässrigen Natriumbicarbonatlösung;
c) Behandeln der erhaltenen Mischung in einem inerten organischen Lösungsmittel mit einem Natriumsalz oder Kaliumsalz eines Alkohols mit der allgemeinen Formel R₁-(OCH₂-CH₂)₂-OH, worin R₁ Wasserstoff oder eine Alkylgruppe mit 1 bis 4 Kohlenstoffatomen bedeutet, bei einer Temperatur zwischen 20 und 100°C, wobei das Salz in einem stöchiometrischen Überschuß in Bezug auf den Gehalt der Chloromethylgruppen in der Mischung vorhanden ist; und
d) Gewinnung der ternären Mischung von (II), (III) und (IV) nach dem Waschen mit Wasser durch Abdestillieren des Lösungsmittels und des überschüssigen Alkohols.

2. Verfahren nach Anspruch 1, worin der Schritt a) in der Gegenwart eines inerten organischen Lösungsmittels vom Kohlenwasserstoff- oder chlorierten Typ durchgeführt wird.

3. Verfahren nach Anspruch 1, worin das inerte organische Lösungsmittel aus der Gruppe ausgewählt wird, bestehend aus Benzol, Cyclohexan und Methylenchlorid.

4. Verfahren nach Anspruch 1, wori der Schritt a) in der Gegenwart des gleichen Lösungsmittels wie in dem Schritt c) durchgeführt wird.

5. Verfahren nach Anspruch 1, worin in Schritt c) das Natrium- oder Kaliumsalz des Alkohols direkt erhalten wird, indem zu der Reaktionsmischung Natrium- oder Kaliumhydroxid und der Alkohol in einem Überschuß bezüglich der stöchiometrischen Menge zugegeben wird.

## Revendications

1. Procédé de préparation d'un mélange ternaire de dérivés de méthylènedioxybenzène ayant les formules : 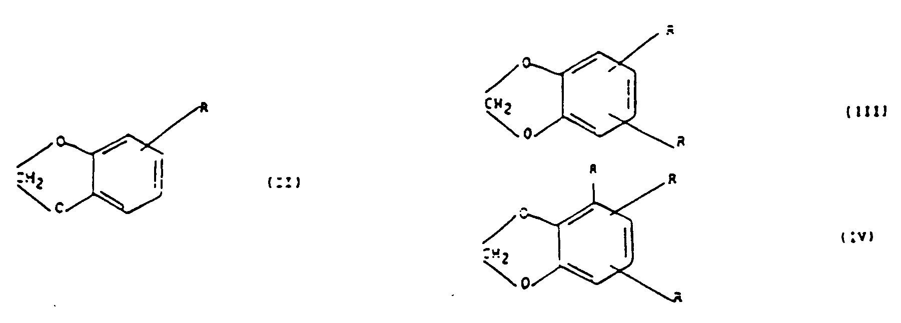 dans lesquelles R signifie CH₂O-(CH₂-CH₂-O)₂-R₁ et R₁ est l'hydrogène ou un groupe alkyle contenant 1 à 4 atomes de carbone, où les composés ayant la formule (II) sont présents dans une quantité en poids allant de 10 à 50%, les composés ayant la formule (III) dans une quantité en poids allant de 30 à 70%, et les composés ayant la formule (IV) dans une quantité en poids allant de 2 à 15%, comprenant les étapes consistant à :
a) chlorométhyler le méthylènedioxybenzène par l'acide chlorhydrique en solution aqueuse (37%) et le paraformaldéhyde pendant 1 à 10 heures à une température entre 40°C et 80°C;
b) isoler par décantation la fraction organique de la masse réactionnelle obtenue dans l'étape a), laver la masse constituée par le mélange de dérivés mono-, di-, et trichlorométhylés du méthylènedioxybenzène avec de l'eau et avec une solution aqueuse de bicarbonate de sodium;
c) traiter le mélange obtenu dans un solvant organique inerte avec un sel de sodium ou un sel de potassium d'un alcool ayant la formule générale R₁-(OCH₂-CH₂)₂-OH où R₁ est un hydrogène ou un groupe alkyle contenant 1 à 4 atomes de carbone, à une température comprise entre 20°C et 100°C, ledit sel étant en excès stoechiométrique par rapport aux groupes chlorométhyle dans ledit mélange; et
d) récupérer le mélange ternaire de (II), (III) et (IV) après lavage à l'eau, par distillation du solvant et de l'alcool en excès.

2. Procédé selon la revendication 2, dans lequel l'étape a) est effectuée en présence d'un solvant organique inerte du type hydrocarbure ou chloré.

3. Procédé selon la revendication 1, dans lequel ledit solvant organique inerte est choisi dans le groupe constitué par le benzène, le cyclohexane, et le chlorure de méthylène.

4. Procédé selon la revendication 1, dans lequel l'étape a) est effectuée en présence du même solvant que celui qui doit être utilisé dans l'étape c).

5. Procédé selon la revendication 1, dans lequel, dans l'étape c), ledit sel de sodium ou de potasium dudit alcool est directement obtenu en ajoutant au mélange réactionnel un hydroxyde de sodium ou de potassium et ledit alcool en excès par rapport à la quantité stoechiométrique.
